# EUROPÄISCHE PATENTSCHRIFT

(11) **EP 2 420 433 B1**
(45) Veröffentlichungstag und Bekanntmachung des Hinweises auf die Patenterteilung: **11.10.2017**
(21) Anmeldenummer: 11176620.0
(22) Anmeldetag: 04.08.2011
(51) Int. Cl.: B62D 25/14, G02B 27/01, G02B 27/00

(54) **Verfahren und Befestigungsanordnung zum lagerichtigen Befestigen eines Geräts an einem Stukturteil eines Kraftfahrzeugs**
Method and fixing assembly for correct fixing of a device to a structural section of a motor vehicle
Procédé et agencement de fixation pour la fixation en position correcte d'un appareil sur un élément de structure d'un véhicule automobile

(30) Priorität: 20.08.2010 DE 102010035766
(43) Veröffentlichungstag der Anmeldung: 22.02.2012
(73) Patentinhaber: PROGRESS-WERK Oberkirch AG, 77704 Oberkirch (DE)
(72) Erfinder: Graf, Hubert, 77704 Oberkirch (DE); Kraus, Tobias, 77871 Renchen (DE); Griebenow, Frank, 77866 Rheinau (DE); Müller, Michael, 77704 Oberkirch (DE); Schmieder, Hansjörg, 77704 Oberkirch (DE); Seiler, Thorsten, 77871 Renchen (DE); Thumbach, Hans-Peter, 77871 Renchen (DE); Willmann, Jakob, 79111 Freiburg (DE)
(74) Vertreter: Witte, Weller & Partner Patentanwälte mbB

(56) Entgegenhaltungen:
- EP-A1- 1 880 926
- EP-A2- 1 094 230
- DE-A1- 10 142 944
- DE-A1- 10 340 248
- DE-A1-102004 004 997
- JP-A- 2010 066 720

## Beschreibung

Die Erfindung betrifft ein Verfahren zum lagerichtigen Befestigen eines Gerätes an einem Strukturteil eines Kraftfahrzeugs über zumindest ein Schraubmittel.

DE 103 40 248 A1 offenbart einen Querträger für eine Instrumententafel, die zwischen zwei festen Säulen eines Kraftfahrzeugs anpassbar ist. Hierzu weist der Querträger ein an einem Endbereich ausgebildetes und in axialer Richtung bewegliches Element auf, das mit zumindest einer der festen Säulen mittels einer Schraube und mit dem Querträger durch ein zwischen dem Querträger und dem beweglichen Element angebrachtes Klebemittel endfest verbunden ist.

DE 101 42 944 A1 offenbart eine Anordnung zum Befestigen eines Gerätes bzw. eines Gerätehalters auf einer Unterlage durch Kleben, wobei an der Anordnung an einem Befestigungselement eine Flanschfläche ausgebildet ist, an der ein beidseitig klebstoffbeschichteter Abdichtring angebracht ist, der den sich zwischen der Unterlage und dem Befestigungselement ausbildenden Klebraum nach außen abdichtet. Eine Einfüllöffnung und eine Entlüftungsöffnung sind vorgesehen, um nach dem Aufsetzen und Anheften des Befestigungselements auf der Unterlage, auf der ein Gerät bzw. ein Gerätehalter befestigt werden soll, ein Verfüllen des durch den Abdichtring umschlossenen und innerhalb des Befestigungselements ausgebildeten Klebraums mit Klebstoff von außen zu ermöglichen.

EP 1 094 230 A2 betrifft ein Verfahren und eine Vorrichtung zur Verbindung eines ersten und zweiten Teils, wobei das zweite Teil gegenüber dem ersten Teil über Langlöcher lagejustiert wird und die Teile mittels eines Haftmittels endfest verbunden werden.

DE 10 2004 004 997 A1 offenbart ein Verfahren zum ausgerichteten Montieren mindestens eines Bauelements an einer Fahrzeugkarosserie. Hierbei wird vorab die einzunehmende Lage eines Verbindungselements bestimmt, dieses mit einem Bauelement gefügt und anschließend wird das Bauelement durch Verschieben entlang von Langlöchern lagejustiert.

EP 1 880 926 A1 lehrt den Toleranzausgleich eines Cockpitmoduls in einem Fahrzeug, wobei das Cockpitmodul ein Tragrohr aufweist, das über einen Halter im Bereich zwischen den beiden A-Säulen an einem unteren Windlauf abgestützt ist. Der Toleranzausgleich wird durch ein Toleranzausgleichselement bewirkt, das zwischen dem Halter und dem Windlauf festgelegt ist. Hierzu weist das Toleranzausgleichselement ein Drehmitnahmeteil auf, das sich auf eine wendelförmige Stützfläche abstützt, die mit einer Schraube in Wechselwirkung steht, durch die beim Eindrehen in eine axiale Öffnung des Drehmittelteils ein Toleranzausgleich herbeigeführt wird.

Ohne Beschränkung der Allgemeinheit wird das erfindungsgemäße Verfahren anhand des Beispiels des Befestigens eines Head-up-Displays an einem Querträger, einem Querträgerteil oder an einem an dem Querträger befestigten Halter beschrieben. In diesem Sinne ist das Gerät demnach das Head-up-Display und das Strukturteil der Querträger, das Querträgerteil bzw. ein an dem Querträger befestigter Halter.

Der Querträger eines Kraftfahrzeuges befindet sich zwischen den beiden A-Säulen unterhalb der Windschutzscheibe und dient als Stabilisierungsteil der Kraftfahrzeugkarosserie sowie zur Befestigung der Lenksäule, des Armaturenbretts bzw. weiterer Armaturen wie beispielsweise eines Head-up-Displays.

Bislang wird ein Head-up-Display (HUD) an einem Querträger(teil) oder an einem an dem Querträger befestigten Halter dadurch befestigt, dass in dem Querträger(teil) oder dem am Querträger befestigten Halter zumindest zwei Bohrungen vorgesehen werden, wobei die eine Bohrung ein Schraubmittel, beispielsweise eine Mutter aufweist, so dass das HUD mittels einer Schraube an dem Halter bzw. an dem Querträger(teil) festgelegt werden kann, während in die zweite Bohrung ein Zentrierstift eingreift, der mit dem HUD verbunden ist.

Das Lagejustieren des HUD ist bei dieser bekannten Vorgehensweise der Befestigung an dem Querträger(teil) bzw. an dem am Querträger befestigten Halter schwierig zu bewerkstelligen. Dies ist dadurch bedingt, dass die Fertigungsungenauigkeiten des Querträgers bzw. -teils oder des am Querträger befestigten Halters, und insbesondere der Bohrungen in dem Halter bzw. in dem Querträger(teil) mitunter so groß sein können, dass es einigen Aufwand bedarf, das HUD lagerichtig am Halter bzw. am Querträger(teil) zu befestigen. Da das HUD ein optisches Gerät ist, mit dem Fahrzeugparameter wie beispielsweise die momentan gefahrene Geschwindigkeit auf die Windschutzscheibe projiziert und aufgrund von Reflexionen an der Windschutzscheibe vom Fahrer abgelesen werden können, ist die lagerichtige Position des HUD besonders wichtig. Bei einer nicht korrekten Ausrichtung des HUD kann es vorkommen, dass die Fahrzeugparameter nicht auf die richtige Stelle auf der Windschutzscheibe projiziert werden, so dass sie nicht im Gesichtsfeld des Fahrers liegen und der Fahrer somit die Fahrzeugparameter nicht ablesen kann, oder verzerrt dargestellt werden.

Die Lagejustierung des HUD im Fahrzeug während der Montage des Fahrzeugs gestaltet sich jedoch, wie oben bereits erwähnt, aufgrund von Fertigungstoleranzen im Halter bzw. im Querträger schwierig und zeitaufwändig.

Der Erfindung liegt daher die Aufgabe zugrunde, ein Verfahren der eingangs genannten Art dahingehend zu verbessern, dass das lagerichtigen Befestigen des Gerätes an dem Strukturteil des Kraftfahrzeugs einfacher und weniger zeitaufwändig wird.

Hinsichtlich des eingangs genannten Verfahrens wird diese Aufgabe durch die folgenden Schritte gelöst:

Bereitstellen eines Toleranzausgleichsteils, das das zumindest eine Schraubmittel aufweist;

Fügen des Toleranzausgleichsteils an das Strukturteil mittels eines Fügeverfahrens, bei dem ein Fügematerial verwendet wird, wobei das Fügeverfahren ausgewählt ist aus Kleben mittels eines Klebstoffs oder Ultraschweißen mittels eines Kunststoffs, wobei das Toleranzausgleichsteil beim Fügen mittels des Fügematerials relativ zu dem Strukturteil durch Einstellen der Dicke einer aus dem Fügematerial gebildeten Schicht zwischen dem Toleranzausgleichsteil und dem Strukturteil lagejustiert wird, wodurch Fertigungstoleranzen des Strukturteils ausgeglichen werden;

Befestigen des Gerätes an dem Toleranzausgleichsteil über das zumindest eine Schraubmittel.

Bei dem erfindungsgemäßen Verfahren wird somit das Gerät nicht mehr unmittelbar an dem Strukturteil des Kraftfahrzeugs befestigt, sondern das Gerät wird an einem Toleranzausgleichsteil befestigt, wobei das Toleranzausgleichsteil an dem Strukturteil des Kraftfahrzeugs lagejustiert befestigt wird. Das lagejustierte Befestigen des Toleranzausgleichsteils an dem Strukturteil erfolgt erfindungsgemäß durch ein Fügeverfahren, bei dem das Toleranzausgleichsteil mittels eines Klebstoffs an dem Strukturteil angeklebt wird, oder bei dem das Toleranzausgleichsteil durch Ultraschallschweißen eines Kunststoffs, der sich beim Ultraschallschweißen verflüssigt und dann wieder aushärtet, an dem Strukturteil festgelegt wird. Dabei werden in beiden Fällen durch das lagejustierte Fügen des Toleranzausgleichsteils am Strukturteil Fertigungstoleranzen des Strukturteils ausgeglichen, so dass das Toleranzausgleichsteil die korrekte Lage und Orientierung für die Befestigung des Gerätes aufweist. Das Gerät ist dann beim Befestigen an dem Toleranzausgleichsteil lagejustiert, so dass ein nachträgliches Lagejustieren des Gerätes im Kraftfahrzeug nicht erforderlich ist oder zumindest wesentlich vereinfacht ist.

Das erfindungsgemäße Verfahren ist daher hinsichtlich der Handhabung einfacher und weniger zeitaufwändig.

In einer Weiterbildung des Verfahrens wird das Toleranzausgleichsteil in zumindest zwei Raumrichtungen lagejustiert, weiter vorzugsweise wird das Toleranzausgleichsteil in allen Raumrichtungen lagejustiert.

Im Fall des Klebens des Toleranzausgleichsteils an dem Strukturteil wird das Toleranzausgleichsteil in zumindest zwei Raumrichtungen, beispielsweise in x- und y-Richtung (d.h. in einer Ebene) justiert, und weiter wird auch die Dicke der Fügematerialschicht eingestellt, so dass vorteilhafterweise Fertigungstoleranzen am Strukturteil in allen drei Raumrichtungen ausgeglichen werden und das Gerät entsprechend in allen drei Raumrichtungen lagerichtig sitzt, wenn es am Toleranzausgleichsteil befestigt ist. Das Einstellen der Dicke der Fügematerialschicht kann auch lokal variierend vorgenommen werden, d.h. die Dicke der Fügematerialschicht kann lokal eingestellt werden.

In einer Weiterbildung ist das zumindest eine Schraubmittel ein Gewinde, das in eine Bohrung des Toleranzausgleichsteils geschnitten oder rolliert ist.

Hierbei ergibt sich der Vorteil einer kostengünstigen Herstellung des Toleranzausgleichsteils, das insgesamt einteilig bzw. einstückig ausgebildet ist.

Alternativ hierzu kann das zumindest eine Schraubmittel eine mit Innengewinde versehene Hülse sein, die in eine Bohrung des Toleranzausgleichsteils eingesetzt oder in letzteres eingegossen ist.

Bei dieser Ausgestaltung sind das zumindest eine Schraubmittel und das Toleranzausgleichsteil zwei Teile, die zunächst zwar noch zusammengefügt werden müssen, was jedoch unter anderem den Vorteil hat, dass das Toleranzausgleichsteil selbst aus Kunststoff gefertigt sein kann, während die Hülse dann aus Metall gefertigt sein kann, wodurch die Kosten des Toleranzausgleichsteils reduziert werden können.

Im Rahmen der zuletzt genannten Ausgestaltung ist es weiterhin bevorzugt, wenn die Hülse einen Abschnitt aufweist, der in eine Bohrung des Strukturteils eingesetzt ist, der Abschnitt einen Außendurchmesser aufweist, der geringer ist als der Innendurchmesser der Bohrung des Strukturteils, und das Fügematerial auch zwischen dem Abschnitt der Hülse und der Bohrung des Strukturteils vorhanden ist.

Bei dieser Ausgestaltung ist von Vorteil, dass durch Aufnahme des Hülsenabschnitts in der Bohrung des Strukturteils die Befestigung des Toleranzausgleichsteils am Strukturteil mechanisch sehr beständig ist, was durch das Fügematerial zwischen dem Abschnitt der Hülse und der Bohrung des Strukturteils noch verbessert wird.

Gemäß einer weiteren bevorzugten Ausgestaltung ist das Toleranzausgleichsteil als im Wesentlichen planer plattenförmiger Riegel ausgebildet.

Im einfachsten Fall ist das Toleranzausgleichsteil eine ebene Platte, die das zumindest eine Schraubmittel aufweist, wobei eine Bohrung zur Aufnahme eines Zentrierstiftes des Gerätes dient. In dieser Ausgestaltung lässt sich das Toleranzausgleichsteil äußerst kostengünstig herstellen, beispielsweise aus Metall oder auch aus Kunststoff.

In einer weiteren bevorzugten Weiterbildung weist das Toleranzausgleichsteil um das zumindest eine Schraubmittel herum einen Fortsatz auf, der in eine Bohrung des Strukturteils eingesetzt ist, wobei der Fortsatz einen Außendurchmesser aufweist, der geringer ist als der Innendurchmesser der Bohrung des Strukturteils, und wobei das Fügematerial auch zwischen dem Fortsatz und der Bohrung des Strukturteils vorhanden ist.

Hierbei ergibt sich wiederum der Vorteil einer mechanisch stabilen Verbindung des Toleranzausgleichsteils mit dem Strukturteil, insbesondere weil die Klebstoffschicht bzw. im Fall des Ultraschallschweißens die Kunststoffschicht das Toleranzausgleichsteil mit dem Strukturteil in drei Raumrichtungen verbindet.

Wie bereits erwähnt, kann das Toleranzausgleichsteil aus Kunststoff oder aus Metall gefertigt sein.

Das erfindungsgemäße Verfahren ist insbesondere dann vorteilhaft, wenn das Gerät ein Head-up-Display ist, und/oder wenn das Strukturteil ein Querträger eines Kraftfahrzeuges oder ein an dem Querträger befestigter Halter ist.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hier noch näher beschrieben. Es zeigen:
- Fig. 1: ein erstes Ausführungsbeispiel einer Befestigungsanordnung zum lagerichtigen Befestigen eines Gerätes an einem Strukturteil eines Kraftfahrzeugs in einer Querschnittsansicht;
- Fig. 2: ein weiteres Ausführungsbeispiel einer Befestigungsanordnung zusammen mit einer Vorrichtung zum Herstellen der Befestigungsanordnung in einer Querschnittsdarstellung;
- Fig. 3: die Befestigungsanordnung in Fig. 2 nach ihrer Herstellung;
- Fig. 4: ein weiteres Ausführungsbeispiel einer Befestigungsanordnung in einer Querschnittsdarstellung;
- Fig. 5: ein noch weiteres Ausführungsbeispiel einer Befestigungsanordnung in einer Querschnittsdarstellung;
- Fig. 6: ein noch weiteres Ausführungsbeispiel einer Befestigungsanordnung in einer Querschnittsdarstellung;
- Fig. 7: ein noch weiteres Ausführungsbeispiel einer Befestigungsanordnung in einer Querschnittsdarstellung; und
- Fig. 8: ein noch weiteres Ausführungsbeispiel einer Befestigungsanordnung in einer Querschnittsdarstellung.

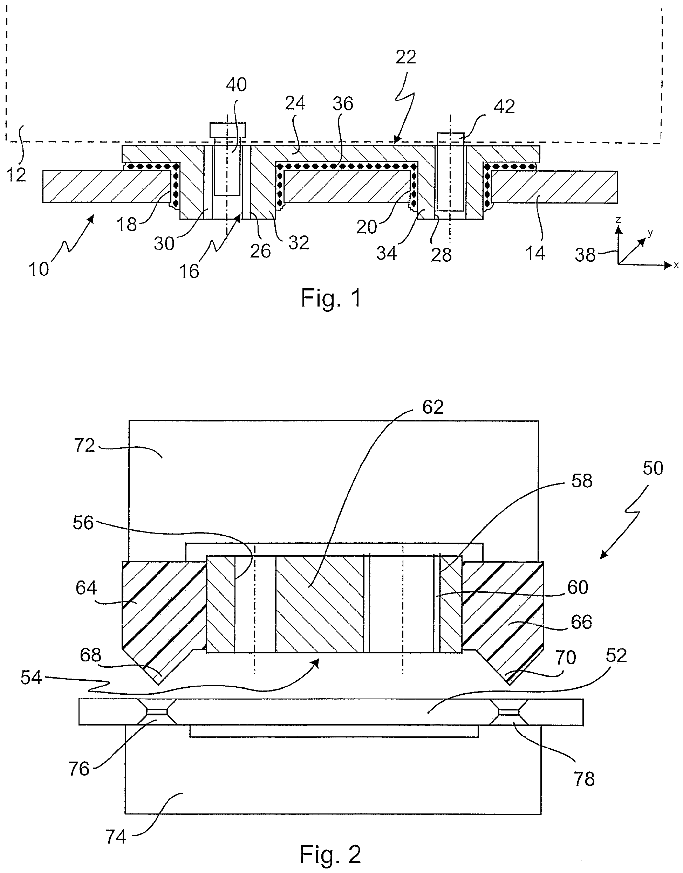

In Fig. 1 ist eine mit dem allgemeinen Bezugszeichen 10 versehene Befestigungsanordnung zum lagejustierten Befestigen eines Gerätes 12 an einem Strukturteil 14 eines nicht dargestellten Kraftfahrzeugs über zumindest ein Schraubmittel 16 dargestellt.

Das Gerät 12 ist beispielsweise ein Head-up-Display, und das Strukturteil 14 ist vorzugsweise ein Abschnitt oder Teil eines Querträgers oder ein an einem Querträger befestigter Halter.

Das Strukturteil 14 ist hier als Platte ausgebildet, in der zwei Bohrungen 18 und 20 vorhanden sind.

Die Befestigungsanordnung 10 weist weiterhin ein Toleranzausgleichsteil 22 auf, das zum Ausgleich von durch Fertigungsungenauigkeiten bedingten Toleranzen des Strukturteils 14 dient, um das Gerät 12 lagerichtig befestigen zu können.

Das Toleranzausgleichsteil 22 ist hier als im Wesentlichen planer plattenförmiger Riegel 24 ausgebildet, der eine erste Bohrung 26 und eine zweite Bohrung 28 aufweist. In der Bohrung 26 ist ein Schraubmittel in Form eines Gewindes 30 vorhanden, wobei das Gewinde hier in die Bohrung 26 geschnitten oder rolliert ist.

Um die Bohrung 26 und die Bohrung 28 herum weist das Toleranzausgleichsteil 22 jeweils einen Fortsatz 32 bzw. 34 auf, wobei der Fortsatz 32 in die Bohrung 18 des Strukturteils 14 und der Fortsatz 34 in die Bohrung 20 des Strukturteils 14 eingesetzt ist.

Vor dem Befestigen des Gerätes 12 an dem Toleranzausgleichsteil 22 ist das Toleranzausgleichsteil 22 an dem Strukturteil 14 mittels eines Fügematerials 36 festgelegt worden. Das Fügematerial 36 ist hier ein Klebstoff.

Beim Fügen des Toleranzausgleichsteils 22 an dem Strukturteil 14 wird das Toleranzausgleichsteil relativ zum Strukturteil 14 so lagejustiert, dass nach dem Verfestigen des Fügematerials 36 das Toleranzausgleichsteil 22 lagerichtig an dem Strukturteil 14 sitzt.

Gegebenenfalls durch zusätzliches Einstellen der Dicke der Schicht des Fügematerials 36, was auch lokal erfolgen kann, kann das Toleranzausgleichsteil in drei Raumrichtungen x, y, z, wie mit einem Koordinatenkreuz 38 in Fig. 1 veranschaulicht ist, relativ zum Strukturteil 14 lagejustiert werden.

Beim Fügen des Toleranzausgleichsteils 22 an dem Strukturteil 14 wird auch Fügematerial 36 zwischen den jeweiligen Fortsatz 32 bzw. 34 und der jeweiligen Bohrung 18 bzw. 20 eingebracht, wie aus Fig. 1 hervorgeht. Dazu ist der Außendurchmesser des jeweiligen Fortsatzes 32 bzw. 34 so gewählt, dass er kleiner ist als der Innendurchmesser der jeweiligen Bohrung 18 bzw. 20, um die Lagejustierung des Toleranzausgleichsteils 22 relativ zum Strukturteil 14 in der x-y-Ebene zu gewährleisten.

Das Lagejustieren des Toleranzausgleichsteils 22 relativ zum Strukturteil 14 erfolgt somit über das Fügen mittels des Fügematerials 36, wobei sich versteht, dass die Schicht des Fügematerials 36 über die gesamte Fügefläche hinweg gleich dick oder unterschiedlich dick sein kann. Das Toleranzausgleichsteil 22 wird beim Fügen in eine bestimmte Richtung relativ zum Strukturteil 14 verschoben oder angehoben oder verkippt, um die spätere richtige Lage des Gerätes 12 nach dessen Befestigung an dem Toleranzausgleichsteil 22 zu gewährleisten.

Das Gerät 12 wird beispielsweise mittels einer Schraube 40 mit dem Schraubmittel 16, hier dem Innengewinde der Bohrung 26 des Toleranzausgleichsteils 22 verschraubt, während in die Bohrung 28 des Toleranzausgleichsteils 22 ein Zentrierstift eingesetzt wird, der mit dem Gerät 12 verbunden ist.

In den nachfolgenden zu beschreibenden Fig. 2 bis 8 ist das lagejustiert zu befestigende Gerät nicht dargestellt.

In Fig. 2 ist eine Befestigungsanordnung 50 gemäß einem weiteren Ausführungsbeispiel dargestellt. Die Befestigungsanordnung 50 weist ein Strukturteil 52 und ein Toleranzausgleichsteil 54 auf.

Das Toleranzausgleichsteil 54 weist eine erste Bohrung 56 und eine zweite Bohrung 58 auf, wobei die zweite Bohrung 58 mit einem Schraubmittel 60 versehen ist, das in Form eines Gewindes ausgebildet ist, das durch Schneiden oder Rollieren in die Bohrung 58 des Toleranzausgleichsteils 54 eingearbeitet ist.

Das Gewinde 60 dient beim Befestigen eines Gerätes zur Aufnahme einer Schraube, und die Bohrung 56 dient zur Aufnahme eines Zentrierstiftes.

Das Toleranzausgleichsteil 54 wird durch einen mittleren, vorzugsweise metallischen plattenförmigen Riegel 62 gebildet, an dessen Enden jeweils ein Kunststoffkörper 64 bzw. 66 fest mit dem Riegel 62 verbunden ist. Alternativ kann auch ein einziger, den plattenförmigen Riegel 62 umfänglich umgebender Kunststoffkörper vorgesehen sein.

Vor dem Befestigen des Toleranzausgleichsteils 54 an dem Strukturteil 52 weisen die Kunststoffkörper 64 jeweils im Wesentlichen spitz zulaufende Enden 68 bzw. 70 auf.

Zum Befestigen des Toleranzausgleichsteils 54 an dem Strukturteil 52 wird hier ein Fügeverfahren angewandt, das in einem Ultraschallschweißen des Kunststoffs der Enden 68 und 70 der Kunststoffkörper 64 und 66 besteht.

In Fig. 2 sind eine Sonotrode 72 und ein Amboss 74 gezeigt, zwischen denen das Toleranzausgleichsteil 54 und das Strukturteil 52 angeordnet sind. Durch Applizieren von Ultraschall verflüssigt sich der Kunststoff im Bereich der Enden 68 und 70 der Kunststoffkörper 64 und 66 und fließt dabei formschlüssig in nicht zylindrische Bohrungen 76 und 78 im Strukturteil 52 ein. Die Bohrungen 76 und 78 sind hier stundenglasförmig ausgebildet. Auch im Fall, dass anstelle der endseitigen Kunststoffkörper 64, 65 ein umfänglich um den Riegel 62 umlaufender Kunststoffkörper vorhanden ist, sind nur die zwei Bohrungen 76 und 78, bzw. eine Mehrzahl an lokalen Bohrungen vorhanden, in die der Kunststoff einfließt.

Auch hier wird beim Fügen mittels des Fügematerials, d.h. des Kunststoffs der Enden 68 und 70, der in die Bohrungen 76 und 78 einfließt, das Toleranzausgleichsteil 54 relativ zum Strukturteil 52 lagerichtig lagejustiert.

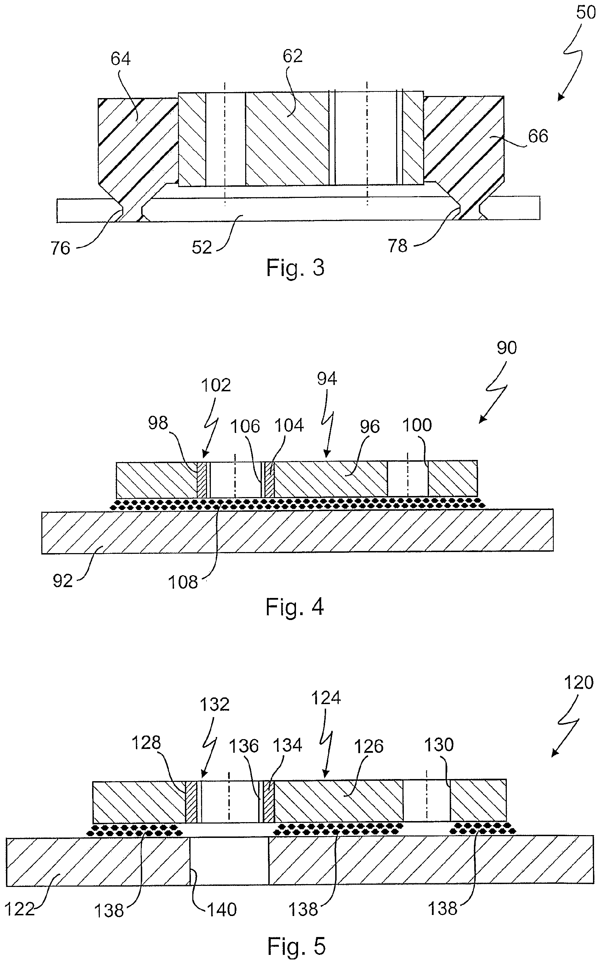

Fig. 3 zeigt den fertigen Zustand der Befestigungsanordnung 50.

In Fig. 4 ist ein weiteres Ausführungsbeispiel einer Befestigungsanordnung 90 zum lagerichtigen Befestigen eines nicht dargestellten Gerätes an einem Strukturteil 92 eines nicht dargestellten Kraftfahrzeugs über zumindest ein Schraubmittel 102 dargestellt.

Die Befestigungsanordnung 90 weist ein Toleranzausgleichsteil 94 auf, das in dem gezeigten Ausführungsbeispiel vollständig als planer plattenförmiger Riegel 96 ausgebildet ist.

In dem Riegel 96 sind zwei Bohrungen 98 und 100 eingebracht worden.

Das Schraubmittel 102 ist in dem gezeigten Ausführungsbeispiel durch eine Hülse oder Mutter 104 gebildet, die ein Innengewinde 106 zum Einschrauben einer nicht dargestellten Schraube zum Befestigen des Gerätes aufweist.

Die Hülse 104 mit dem Innengewinde 106 ist dabei in die Bohrung 98 durch jedes beliebige Verfahren eingesetzt, beispielsweise durch Kleben, Schweißen, Pressen und dergleichen.

Das Strukturteil 92 weist in dem hier gezeigten Ausführungsbeispiel keine Bohrung auf, und das Toleranzausgleichsteil 94 ist über die gesamte Fläche des Riegels 96 über ein Fügematerial 108, hier einen Klebstoff, flächig auf das Strukturteil 92 aufgeklebt. Auch hier gilt wiederum, dass beim Fügen mittels des Fügematerials 108 das Toleranzausgleichsteil 94 relativ zum Strukturteil 92 lagerichtig ausgerichtet und positioniert wird, damit das später anzubringende Gerät ebenfalls lagerichtig positioniert ist, wenn es an dem Toleranzausgleichsteil 94 über das Schraubmittel 102 befestigt wird. Dabei kann auch die Dicke der Schicht des Fügematerials 108 entlang der Fügefläche unterschiedlich eingestellt werden, um eine Lagejustierung in allen drei Raumrichtungen x, y und z zu ermöglichen.

Fig. 5 zeigt ein weiteres Ausführungsbeispiel einer Befestigungsanordnung 120 zum lagerichtigen Befestigen eines nicht dargestellten Gerätes an einem Strukturteil 122 eines nicht dargestellten Kraftfahrzeuges.

Die Befestigungsanordnung 120 weist ein Toleranzausgleichsteil 124 auf, das wie in dem vorhergehenden Ausführungsbeispiel als vollkommen planarer plattenförmiger Riegel 126 mit einer ersten Bohrung 128 und einer zweiten Bohrung 130 ausgebildet ist.

In der Bohrung 128 ist ein Schraubmittel 132 angeordnet, das wie in dem vorhergehenden Ausführungsbeispiel durch eine Hülse 134 gebildet ist, die mit einem Innengewinde 136 versehen ist. Die Hülse 134 ist in die Bohrung 128 eingesetzt und mit dem Riegel 126 auf jede geeignete Weise wie zuvor mit Bezug auf die Hülse 104 beschrieben festgelegt.

Das Toleranzausgleichsteil 124 ist mittels eines Fügematerials 138 an dem Strukturteil 122 lagejustiert befestigt. Durch zusätzliches Einstellen der Dicke des Fügematerials 138 zwischen dem Toleranzausgleichsteil 124 und dem Strukturteil 122 kann das Toleranzausgleichsteil 124 auch in z-Richtung lagerichtig relativ zum Strukturteil 122 positioniert werden.

Im Unterschied zu dem vorhergehenden Ausführungsbeispiel ist das Fügematerial 138 nicht durchgehend im Spalt zwischen dem Toleranzausgleichsteil bzw. dem Riegel 126 und dem Strukturteil 122 vorhanden, sondern nur abschnittsweise. Wie aus Fig. 5 hervorgeht, ist im Bereich der Bohrung 128 und im Bereich der Bohrung 130 zwischen dem Toleranzausgleichsteil 124 und dem Strukturteil 122 kein Fügematerial vorhanden.

Bei dem in Fig. 5 gezeigten Ausführungsbeispiel weist das Strukturteil 122 ferner eine Bohrung 140 auf, die mit der Bohrung 128 im Toleranzausgleichsteil 124 fluchtet. Hierdurch wird es ermöglicht, dass eine Schraube, mit der das nicht dargestellte Gerät am Toleranzausgleichsteil 124 befestigt wird, in die Bohrung 140 hineinragen kann.

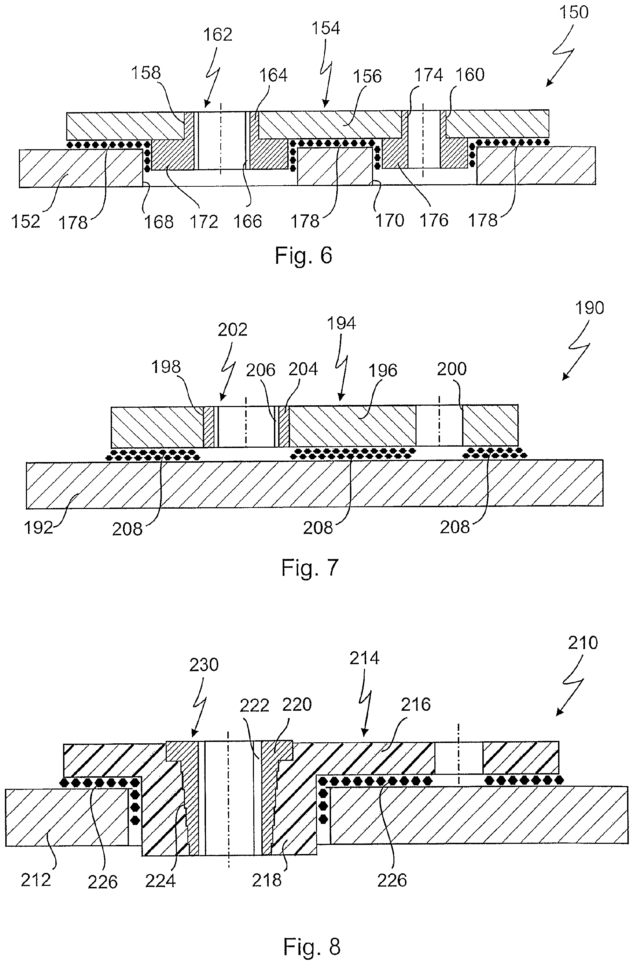

Fig. 6 zeigt ein weiteres Ausführungsbeispiel einer Befestigungsanordnung 150 zum lagerichtigen Befestigen eines nicht dargestellten Gerätes an einem Strukturteil 152 eines nicht dargestellten Kraftfahrzeuges über zumindest ein Schraubmittel 162.

Die Befestigungsanordnung 150 weist ein Toleranzausgleichsteil 154 auf, das als planarer plattenförmiger Riegel 156 mit einer ersten Bohrung 158 und einer zweiten Bohrung 160 ausgebildet ist.

Das Schraubmittel 162 wird durch eine Hülse 164 mit einem Innengewinde 166 gebildet, die in die Bohrung 158 eingesetzt und dort wie oben beschrieben festgelegt ist.

Das Strukturteil 152 weist eine Bohrung 168 und eine Bohrung 170 auf, ähnlich zu dem Strukturteil 14 in Fig. 1.

Die Hülse 164, die das Innengewinde 166 aufweist, weist einen Abschnitt 172 auf, der in die Bohrung 168 des Strukturteils 152 eingesetzt ist, wobei der Abschnitt 172 einen Außendurchmesser aufweist, der geringer ist als der Innendurchmesser der Bohrung 168.

In die Bohrung 160 ist eine weitere Hülse 174 eingesetzt, die ohne Innengewinde ausgebildet ist und zur Aufnahme des bereits oben erwähnten Zentrierstiftes des zu befestigenden Gerätes dient. Auch die Hülse 174 weist einen Abschnitt 176 auf, dessen Außendurchmesser geringer ist als der Innendurchmesser der Bohrung 170, wobei der Abstand 176 in die Bohrung 70 des Strukturteils 152 eingesetzt ist.

Das Toleranzausgleichsteil 154 ist an dem Strukturteil 152 mittels eines Fügematerials 178 gefügt, wobei das Fügematerial 178, hier ein Klebstoff, auch zwischen dem jeweiligen Abschnitt 172 bzw. 176 der Hülse 164 bzw. 174 und der jeweiligen Bohrung 168 bzw. 170 vorhanden ist.

Auch bei der Befestigungsanordnung 150 wird das Toleranzausgleichsteil 154 beim Fügen mittels des Fügematerials 178 im Sinne eines optimalen Ausgleichs von Fertigungstoleranzen des Strukturteils 152 einschließlich seiner Bohrungen 168 und 170 relativ zum Strukturteil 152 lagejustiert.

Fig. 7 zeigt eine Befestigungsanordnung 190 zum lagejustierten Befestigen eines nicht dargestellten Gerätes an einem Strukturteil 192 eines nicht dargestellten Kraftfahrzeuges.

Die Befestigungsanordnung 190 weist ein Toleranzausgleichsteil 194 auf, das als insgesamt planarer Riegel 196 mit einer ersten Bohrung 198 und einer zweiten Bohrung 200 ausgebildet ist. In der Bohrung 198 ist ein Schraubmittel 202 angeordnet, das durch eine mit Innengewinde 206 versehene Hülse 204 gebildet ist, die in die Bohrung 198 fest eingesetzt ist.

Die Befestigungsanordnung 190 unterscheidet sich von der Befestigungsanordnung 90 in Fig. 4 dadurch, dass das Toleranzausgleichsteil 194 mit dem Strukturteil 192 über ein Fügematerial 208 gefügt ist, hier einem Klebstoff, wobei das Fügematerial 208 jedoch im Bereich der Bohrung 198 und der Bohrung 200 nicht zwischen dem Toleranzausgleichsteil 194 und dem Strukturteil 192 vorhanden ist.

Während bei den zuvor beschriebenen Befestigungsanordnungen das jeweilige Toleranzausgleichsteil vorzugsweise aus Metall gefertigt ist, jedoch auch aus Kunststoff gefertigt sein kann, zeigt Fig. 8 eine Befestigungsanordnung 210, die ein Toleranzausgleichsteil aufweist, das wie nachfolgend aus Kunststoff gefertigt ist.

Die Befestigungsanordnung 210 weist ein Strukturteil 212 und ein Toleranzausgleichsteil 214 auf.

Das Toleranzausgleichsteil 214 ist, wie bereits erwähnt, aus Kunststoff gefertigt und weist einen planaren plattenförmigen Riegel 216 und einen einstückig mit dem Riegel 216 ausgebildeten Fortsatz 218 auf, ähnlich zu der Ausgestaltung des Toleranzausgleichsteils 22 in Fig. 1.

Das Toleranzausgleichsteil 214 weist ein Schraubmittel 230 auf, das in Form einer Hülse oder Mutter 220 mit einem Innengewinde 222 ausgebildet ist. Die Hülse oder Mutter 220 ist dabei bei der Herstellung des Toleranzausgleichsteils 214 in den Kunststoff desselben eingegossen worden, wobei die Hülse 220 außenseitig mit einer Strukturierung 224 versehen ist, beispielsweise einer Riffelung oder einer Zahnung oder einer anderen Struktur, wodurch die Hülse 220 verdrehsicher in dem Toleranzausgleichsteil 214 gehalten ist.

Das Toleranzausgleichsteil 214 ist mittels eines Fügematerials 226 gefügt, hier einem Klebstoff, wobei beim Fügen das Toleranzausgleichsteil 214 in die richtige Position und Orientierung bzw. Ausrichtung relativ zu dem Strukturteil 212 gebracht wird, so dass das an dem Toleranzausgleichsteil 214 anzubringende Gerät nach dessen Befestigung ebenfalls lagerichtig positioniert und orientiert ist.

Die zuvor beschriebenen Befestigungsanordnungen 10, 50, 90, 120, 150, 190, 210 ermöglichen es auch, das Toleranzausgleichsteil an dem Strukturteil bereits vor der Montage des Strukturteils an oder in dem Fahrzeug lagejustiert zu befestigen, so dass nach dem Einbau der Anordnung aus Strukturteil und Toleranzausgleichsteil das entsprechende Gerät lediglich an dem lagerichtig justierten Toleranzausgleichsteil montiert werden muss, ohne dass das Gerät selbst noch einer aufwändigen Justage unterzogen werden muss.

## Patentansprüche

1. Verfahren zum lagerichtigen Befestigen eines Gerätes (12) an einem Strukturteil (14; 52; 92; 122; 152; 192; 212) eines Kraftfahrzeugs über zumindest ein Schraubmittel (16; 60; 102; 132; 162; 202; 230), **gekennzeichnet durch** die Schritte:
Bereitstellen eines Toleranzausgleichsteils (22; 54; 94; 124; 154; 194; 214), das das zumindest eine Schraubmittel (16; 60; 102; 132; 162; 202; 230) aufweist;
Fügen des Toleranzausgleichsteils (22; 54; 94; 124; 154; 194; 214) an das Strukturteil (14; 52; 92; 122; 152; 192; 212) mittels eines Fügeverfahrens, bei dem ein Fügematerial (36; 68; 108; 138; 178; 208; 226) verwendet wird, wobei das Fügeverfahren ausgewählt ist aus Kleben mittels eines Klebstoffs oder Ultraschallschweißen mittels eines Kunststoffs, wobei das Toleranzausgleichsteil (22; 54; 94; 124; 154; 194; 214) beim Fügen mittels des Fügematerials (36; 68; 108; 138; 178; 208; 226) relativ zu dem Strukturteil (14; 52; 92; 122; 152; 192; 212) durch Einstellen der Dicke einer aus dem Fügematerial (36; 68; 108; 138; 178; 208; 226) gebildeten Schicht zwischen dem Toleranzausgleichsteil (22; 54; 94; 124; 154; 194; 214) und dem Strukturteil (14; 52; 92; 122; 152; 192; 212) lagejustiert wird, wodurch Fertigungstoleranzen des Strukturteils (14; 52; 92; 122; 152; 192; 212) ausgeglichen werden;
Befestigen des Gerätes (12) an dem Toleranzausgleichsteil (22; 54; 94; 124; 154; 194; 214) über das zumindest eine Schraubmittel (16; 60; 102; 132; 162; 202; 230).

2. Verfahren nach Anspruch 1, **dadurch gekennzeichnet, dass** das Toleranzausgleichsteil (22; 54; 94; 124; 154; 194; 214) in zumindest zwei Raumrichtungen lagejustiert wird.

3. Verfahren nach Anspruch 1 oder 2, **dadurch gekennzeichnet, dass** das Toleranzausgleichsteil (22; 54; 94; 124; 154; 194; 214) in allen Raumrichtungen lagejustiert wird.

4. Verfahren nach einem der Ansprüche 1 bis 3, **dadurch gekennzeichnet, dass** das zumindest eine Schraubmittel (16; 60) ein Gewinde (30; 60) ist, das in eine Bohrung (26; 58) des Toleranzausgleichsteils (22; 54) geschnitten oder rolliert ist.

5. Verfahren nach einem der Ansprüche 1 bis 3, **dadurch gekennzeichnet, dass** das zumindest eine Schraubmittel (102; 132; 162; 202; 230) eine mit Innengewinde (106; 136; 166; 206; 222) versehene Hülse (104; 134; 164; 204; 220) ist, die in eine Bohrung (98; 128; 158; 198) des Toleranzausgleichsteils (94; 124; 154; 194; 214) eingesetzt ist oder in letzteres eingegossen ist.

6. Verfahren nach Anspruch 5, **dadurch gekennzeichnet, dass** die Hülse (164) einen Abschnitt (172) aufweist, der in eine Bohrung (168) des Strukturteils (152) eingesetzt ist, dass der Abschnitt (172) einen Außendurchmesser aufweist, der geringer ist als der Innendurchmesser der Bohrung (168) des Strukturteils (152), und dass das Fügematerial (178) auch zwischen dem Abschnitt (172) der Hülse (164) und der Bohrung (168) des Strukturteils (152) eingebracht wird.

7. Verfahren nach einem der Ansprüche 1 bis 6, **dadurch gekennzeichnet, dass** das Toleranzausgleichsteil (22; 54; 94; 124; 154; 194; 214) als im Wesentlichen planer plattenförmiger Riegel ausgebildet ist.

8. Verfahren nach einem der Ansprüche 1 bis 7, **dadurch gekennzeichnet, dass** das Toleranzausgleichsteil (22; 214) um das zumindest eine Schraubmittel (16; 230) herum einen Fortsatz (32; 218) aufweist, der in eine Bohrung (18) des Strukturteils (14; 212) eingesetzt ist, dass der Fortsatz (32; 218) einen Außendurchmesser aufweist, der geringer ist als der Innendurchmesser der Bohrung (18) des Strukturteils (14; 212), und dass das Fügematerial (36; 226) auch zwischen dem Fortsatz (32; 218) und der Bohrung (18) des Strukturteils (14; 212) eingebracht wird.

9. Verfahren nach einem der Ansprüche 1 bis 8, **dadurch gekennzeichnet, dass** das Toleranzausgleichsteil (214) aus Kunststoff gefertigt ist.

10. Verfahren nach einem der Ansprüche 1 bis 8, **dadurch gekennzeichnet, dass** das Toleranzausgleichsteil (22; 54; 94; 124; 154; 194) aus Metall gefertigt ist.

11. Verfahren nach einem der Ansprüche 1 bis 10, **dadurch gekennzeichnet, dass** das Gerät (12) ein Head-Up-Display ist.

12. Verfahren nach einem der Ansprüche 1 bis 11, **dadurch gekennzeichnet, dass** das Strukturteil (22; 54; 94; 124; 154; 194; 214) ein Querträger(teil) eines Kraftfahrzeugs oder ein an dem Querträger befestigter Halter ist.

## Claims

1. Method for fastening a device (12) in correct position to a structural part (14; 52; 92; 122; 152; 192; 212) of a motor vehicle via at least one screw means (16; 60; 102; 132; 162; 202; 230), **characterized by** the following steps:
providing a tolerance-compensating part (22; 54; 94; 124; 154; 194; 214) which has the at least one screw means (16; 60; 102; 132; 162; 202; 230);
joining the tolerance-compensating part (22; 54; 94; 124; 154; 194; 214) to the structural part (14; 52; 92; 122; 152; 192; 212) by means of a joining process in which a joining material (36; 68; 108; 138; 178; 208; 226) is used, the joining process being selected from adhesive bonding by means of an adhesive or ultrasonic welding by means of a plastic, wherein the tolerance-compensating part (22; 54; 94; 124; 154; 194; 214) is adjusted in position relative to the structural part (14; 52; 92; 122; 152; 192; 212) during the joining by means of the joining material (36; 68; 108; 138; 178; 208; 226) by adjusting of the thickness of a layer formed by the joining material (36; 68; 108; 138; 178; 208; 226) between the tolerance-compensating part (22; 54; 94; 124; 154; 194; 214) and the structural part (14; 52; 92; 122; 152; 192; 212), whereby manufacturing tolerances of the structural part (14; 52; 92; 122; 152; 192; 212) are compensated;
fastening the device (12) to the tolerance-compensating part (22; 54; 94; 124; 154; 194; 214) via the at least one screw means (16; 60; 102; 132; 162; 202; 230).

2. Method of claim 1, **characterized in that** the tolerance-compensating part (22; 54; 94; 124; 154; 194; 214) is adjusted in position in at least two directions in space.

3. Method of claim 1 or 2, **characterized in that** the tolerance-compensating part (22; 54; 94; 124; 154; 194; 214) is adjusted in position in all directions in space.

4. Method of any one of claims 1 to 3, **characterized in that** the at least one screw means (16; 60) is a thread (30; 60) which is cut or roller burnished into a hole (26; 58) in the tolerance-compensating part (22; 54).

5. Method of any one of claims 1 to 3, **characterized in that** the at least one screw means (102; 1.32; 162; 202; 230) is a sleeve (104; 134; 164; 204; 220) which is provided with an internal thread (106; 136; 166; 206; 222), which sleeve is inserted into a hole (98; 128; 158; 198) in the tolerance-compensating part (94; 124; 154; 194; 214) or is cast into the latter.

6. Method of claim 5, **characterized in that** the sleeve (164) has a portion (172) which is inserted into a hole (168) in the structural part (152), **in that** the portion (172) has an outside diameter which is smaller than the inside diameter of the hole (168) in the structural part (152), and **in that** the joining material (178) is also applied between the portion (172) of the sleeve (164) and the hole (168) in the structural part (152).

7. Method of any one of claims 1 through 6, **characterized in that** the tolerance-compensating part (22; 54; 94; 124; 154; 194; 214) is designed as a substantially flat, plate-like crossbar.

8. Method of any one of claims 1 through 7, **characterized in that** the tolerance-compensating part (22; 214) has an extension (32; 218) around the at least one screw means (16; 230), which extension is inserted into a hole (18) in the structural part (14; 212), **in that** the extension (32; 218) has an outside diameter which is smaller than the inside diameter of the hole (18) in the structural part (14; 212), and **in that** the joining material (36; 336) is also applied between the extension (32; 218) and the hole (18) in the structural part (14; 212).

9. Method of any one of claims 1 through 8, **characterized in that** the tolerance-compensating part (214) is manufactured from plastic.

10. Method of any one of claims 1 through 8, **characterized in that** the tolerance-compensating part (22; 54; 94; 124; 154; 194) is manufactured from metal.

11. Method of any one of claims 1 through 10, **characterized in that** the device (12) is a Head-up display.

12. Method of any one of claims 1 through 11, **characterized in that** the structural part (22; 54; 94; 124; 154; 194; 214) is a cross member(part) of a motor vehicle or is a holder which is fastened to the cross member.

## Revendications

1. Procédé servant à fixer dans la position adéquate un appareil (12) au niveau d'une partie de structure (14 ; 52 ; 92 ; 122 ; 152 ; 192 ; 212) d'un véhicule automobile par l'intermédiaire d'au moins un moyen de vissage (16 ; 60 ; 102 ; 132 ; 162 ; 202 ; 230), **caractérisé par** les étapes consistant à :
fournir une partie de compensation de tolérance (22 ; 54 ; 94 ; 124 ; 154 ; 194 ; 214), qui présente l'au moins un moyen de vissage (16 ; 60 ; 102 ; 132 ; 162 ; 202 ; 230) ;
assembler la partie de compensation de tolérance (22 ; 54 ; 94 ; 124 ; 154 ; 194 ; 214) à la partie de structure (14 ; 52 ; 92 ; 122 ; 152 ; 192 ; 212) au moyen d'un procédé d'assemblage, dans lequel un matériau d'assemblage (36 ; 68 ; 108 ; 138 ; 178 ; 208 ; 226) est utilisé, dans lequel le procédé d'assemblage est choisi parmi le collage au moyen d'une colle ou le soudage par ultrasons au moyen d'une matière plastique, dans lequel la partie de compensation de tolérance (22 ; 54 ; 94 ; 124 ; 154 ; 194 ; 214) est ajustée en position lors de l'assemblage au moyen du matériau d'assemblage (36 ; 68 ; 108 ; 138 ; 178 ; 208 ; 226) par rapport à la partie de structure (14 ; 52 ; 92 ; 122 ; 152 ; 192 ; 212) en réglant l'épaisseur d'une couche formée à partir du matériau d'assemblage (36 ; 68 ; 108 ; 138 ; 178 ; 208 ; 226) entre la partie de compensation de tolérance (22 ; 54 ; 94 ; 124 ; 154 ; 194 ; 214) et la partie de structure (14 ; 52 ; 92 ; 122 ; 152 ; 192 ; 212), ce qui permet de compenser des tolérances de production de la partie de structure (14 ; 52 ; 92 ; 122 ; 152 ; 192 ; 212) ;
fixer l'appareil (12) au niveau de la partie de compensation de tolérance (22 ; 54 ; 94 ; 124 ; 154 ; 194 ; 214) par l'intermédiaire de l'au moins un moyen de vissage (16 ; 60 ; 102 ; 132 ; 162 ; 202 ; 230).

2. Procédé selon la revendication 1, **caractérisé en ce que** la partie de compensation de tolérance (22 ; 54 ; 94 ; 124 ; 154 ; 194 ; 214) est ajustée en position dans au moins deux directions spatiales.

3. Procédé selon la revendication 1 ou 2, **caractérisé en ce que** la partie de compensation de tolérance (22 ; 54 ; 94 ; 124 ; 154 ; 194 ; 214) est ajustée en position dans toutes les directions spatiales.

4. Procédé selon l'une quelconque des revendications 1 à 3, **caractérisé en ce que** l'au moins un moyen de vissage (16 ; 60) est un filetage (30 ; 60), qui est coupé ou roulé dans un alésage (26 ; 58) de la partie de compensation de tolérance (22 ; 54).

5. Procédé selon l'une quelconque des revendications 1 à 3, **caractérisé en ce que** l'au moins un moyen de vissage (102 ; 132 ; 162 ; 202 ; 230) est une douille (104 ; 134 ; 164 ; 204 ; 220) pourvue d'un filetage intérieur (106; 136 ; 166 ; 206 ; 222), laquelle est insérée dans un alésage (98 ; 128 ; 158 ; 198) de la partie de compensation de tolérance (94 ; 124 ; 154 ; 194 ; 214) ou est coulée dans cette dernière.

6. Procédé selon la revendication 5, **caractérisé en ce que** la douille (164) présente une section (172), qui est insérée dans un alésage (168) de la partie de structure (152), que la section (172) présente un diamètre extérieur qui est inférieur au diamètre intérieur de l'alésage (168) de la partie de structure (152), et que le matériau d'assemblage (178) est introduit également entre la section (172) de la douille (164) et l'alésage (168) de la partie de structure (152).

7. Procédé selon l'une quelconque des revendications 1 à 6, **caractérisé en ce que** la partie de compensation de tolérance (22 ; 54 ; 94 ; 124 ; 154 ; 194 ; 214) est réalisée sous la forme d'un verrou en forme de plaque sensiblement plan.

8. Procédé selon l'une quelconque des revendications 1 à 7, **caractérisé en ce que** la partie de compensation de tolérance (22 ; 214) présente, tout autour de l'au moins un moyen de vissage (16 ; 230), un prolongement (32 ; 218), qui est inséré dans un alésage (18) de la partie de structure (14 ; 212), que le prolongement (32 ; 218) présente un diamètre extérieur qui est inférieur au diamètre intérieur de l'alésage (18) de la partie de structure (14 ; 212), et que le matériau d'assemblage (36 ; 226) est introduit également entre le prolongement (32 ; 218) et l'alésage (18) de la partie de structure (14 ; 212).

9. Procédé selon l'une quelconque des revendications 1 à 8, **caractérisé en ce que** la partie de compensation de tolérance (214) est produite à partir de matière plastique.

10. Procédé selon l'une quelconque des revendications 1 à 8, **caractérisé en ce que** la partie de compensation de tolérance (22 ; 54 ; 94 ; 124 ; 154 ; 194) est produite à partir de métal.

11. Procédé selon l'une quelconque des revendications 1 à 10, **caractérisé en ce que** l'appareil (12) est un affichage tête haute.

12. Procédé selon l'une quelconque des revendications 1 à 11, **caractérisé en ce que** la partie de structure (22 ; 54 ; 94 ; 124 ; 154 ; 194 ; 214) est une (partie de) traverse d'un véhicule automobile ou un support fixé au niveau de la traverse.
